# EUROPÄISCHE PATENTSCHRIFT

(11) **EP 0 884 203 B1**
(45) Veröffentlichungstag und Bekanntmachung des Hinweises auf die Patenterteilung: **07.11.2001**
(21) Anmeldenummer: 98110138.9
(22) Anmeldetag: 04.06.1998
(51) Int. Cl.: B60G 17/052, B60G 17/015

(54) **Niveauregeleinrichtung für Fahrzeuge mit Luftfedern**
Height control device for vehicles with air springs
Dispositif de réglage du niveau pour véhicules à ressorts à gaz

(30) Priorität: 12.06.1997 DE 19724747
(43) Veröffentlichungstag der Anmeldung: 16.12.1998
(73) Patentinhaber: Continental Aktiengesellschaft, 30165 Hannover (DE)
(72) Erfinder: Folchert, Uwe, 31867 Lauenau (DE)

(56) Entgegenhaltungen:
- EP-A- 0 224 663
- WO-A-93/05972
- DE-A- 3 919 438
- DE-A- 19 528 852
- PATENT ABSTRACTS OF JAPAN vol. 004, no. 096 (M-020), 11. Juli 1980 & JP 55 055012 A (AISIN SEIKI CO LTD), 22. April 1980

## Beschreibung

Die Erfindung betrifft eine Niveauregeleinrichtung für Fahrzeuge mit Luftfedern, durch die ein Fahrzeugaufbau gegenüber mindestens einer Fahrzeugachse abgefedert ist, wobei
- jede Luftfeder zum Auffüllen über einen Lufttrockner und ein zur Luftfeder öffnendes Rückschlagventil mit einer Druckluftquelle verbindbar ist
- jede Luftfeder zum Entleeren über ein erstes steuerbares Wegeventil und den Lufttrockner mit der Atmosphäre verbindbar ist.

Eine derartige Niveauregeleinrichtung für Fahrzeuge mit Luftfedern ist beispielsweise aus der US-A-4,465,297 bekannt. Zum Auffüllen der Luftfeder wird diese über einen Lufttrockner, ein Rückschlagventil und ein elektrisch ansteuerbares erstes Wegeventil mit einer Druckluftquelle verbunden, wobei der Lufttrockner beim Auffüllen der Luftfeder im Trocknungsbetrieb betrieben wird. Beim Entleeren der Luftfeder wird diese über das erste elektrisch ansteuerbare Wegeventil, eine Drossel, den Lufttrockner und über ein zweites elektrisch ansteuerbares Wegeventil mit der Atmpsphäre verbunden, wobei beim Entleeren der Luftfeder der Lufttrockner im Renerationsbetrieb betrieben wird. Aus diesem Grunde weist die über das zweite elektrisch ansteuerbare Wegeventil in der Atmosphäre abgeleitete Luft eine hohe Luftfeuchtigkeit auf, so dass das zweite elektrisch ansteuerbare Ventil bei niedrigen Temperaturen zur Vereisung neigt. Ist eine Vereisung des zweiten elektrisch ansteuerbaren Ventils erfolgt, so kann dieses Ventil nicht mehr geschaltet werden, da die Schaltkräfte eines elektrischen ansteuerbaren Wegeventils nicht genügend groß sind, um ein vereistes Ventil "loszubrechen". In diesem Fall bleibt also die Niveauregeleinrichtung über das zweite elektrisch ansteuerbare Wegeventil ständig mit der Atmosphäre verbunden, so dass zumindest ein Auffüllen der Luftfeder mit Hilfe der Druckluftquelle nicht mehr möglich ist, da die von der Druckluftquelle erzeugte Druckluft sofort in die Atmosphäre entweicht.

Der Erfindung liegt die Aufgabe zugrunde, eine Niveauregeleinrichtung für Fahrzeuge mit Luftfedern zu schaffen, die auch bei niedrigen Umgebungstemperaturen, bei denen eine Vereisungsgefahr besteht, noch funktionstüchtig ist.

Ausgehend von einer Niveauregeleinrichtung für Fahrzeuge mit Luftfedern der eingangs genannten Art wird die Aufgabe dadurch gelöst, dass ein zweites pneumatisch steuerbares Wegeventil zwischen der Druckluftquelle und dem Lufttrockner angeordnet ist, dessen Steuereingang
- in einem ersten Schaltzustand des zweiten Wegeventils mit der von der Druckluftquelle erzeugten Druckluft beaufschlagt ist, wobei dann die Druckmittelquelle über das zweite Wegeventil mit dem Lufttrockner verbunden ist
- in einem zweiten Schaltzustand des zweiten Wegeventils mit dem Atmosphärenluftdruck beaufschlagt ist, wobei dann die Atmosphäre über das zweite Wegeventil mit dem Lufttrockner verbunden ist
und ferner dadurch, dass die Steuerleitung, die auf den Steuereingang des zweiten Wegeventils führt, über ein steuerbares drittes Wegeventil mit der Atmosphäre verbindbar ist.

Der Grundgedanke der Erfindung ist darin zu sehen, dass das steuerbare Wegeventil, über · das feuchte Luft von der Luftfeder in die Atmosphäre abgeführt wird bzw. über das feuchte Luft von der Druckluftquelle in den Lufttrockner geführt wird, durch die von der Druckluftquelle erzeugte Druckluft pneumatisch gesteuert wird.

Die mit der Erfindung erzielten Vorteile sind insbesondere darin zu sehen, dass das pneumatisch steuerbare zweite Wegeventil mit einem großen Strömungsquerschnitt versehen werden kann und somit eine geringe Vereisungsneigung aufweist. Ein weiterer Vorteil der Erfindung ist darin zu sehen, dass die Steuerleitung des pneumatisch steuerbaren zweiten Wegeventils gezielt mit der von der Druckluftquelle erzeugten Druckluft beaufschlag werden kann. Somit ist es möglich, an der Steuerleitung des pneumatisch steuerbaren zweiten Wegeventils zumindest kurzzeitig den Luftdruck zu erzeugen, der zur Schaltung dieses Ventils notwendig ist. Ist das Ventil beispielsweise trotz des großen Strömungsquerschnitts vereist, so kann die Steuerleitung des pneumatisch steuerbaren zweiten Wegeventils kurzzeitig mit einem sehr hohen Luftdruck beaufschlagt werden, um es loszubrechen.

Gemäß einem ersten Ausführungsbeispiel der Erfindung ist das dritte Wegeventil als elektrisch steuerbares Wegeventil ausgebildet. Eine derartige Ausbildung des dritten Wegeventils ist möglich, obwohl über das dritte Wegeventil feuchte Luft geführt wird, da die über dieses Ventil geführte Luftmenge so gering ist, dass eine Vereisung des dritten Wegeventils praktisch ausgeschlossen ist.

Gemäß einem alternativen Ausführungsbeispiel ist das dritte Wegeventil ebenfalls als pneumatisch steuerbares Wegeventil ausgebildet. Der Vorteil dieses Ausführungsbeispiels ist darin zu sehen, dass auch am dritten Wegeventil dann hohe Schaltkräfte erzeugt werden können, so dass dieses Wegeventil auch dann noch geschaltet werden kann, wenn es wider Erwarten vereist.

Das pneumatisch steuerbare dritte Wegeventil kann zwei pneumatisch steuerbare Steuereingänge aufweisen. Hierbei liegt in einem ersten Schaltzustand des dritten Wegeventil an dem ersten Steuereingang der von der Druckluftquelle erzeugte Luftdruck und an dem zweiten Steuereingang ein Luftdruck an, der kleiner ist als der von der Druckluftquelle erzeugte Luftdruck, wobei das dritte Wegeventil dann die Verbindung der Steuerleitung des zweiten Wegeventils zur Atmosphäre sperrt. In einem zweiten Schaltzustand des dritten Wegeventils liegt an dem ersten Steuereingang und an dem zweiten Steuereingang der gleiche Luftdruck an, wobei das dritte Wegeventil dann die Verbindung der Steuerleitung des zweiten Wegeventils zur Atmosphäre öffnet.

Gemäß einer Weiterbildung der Erfindung ist die Steuerleitung, die auf den Steuereingang des zweiten Wegeventils führt, in einem dritten Schaltzustand des zweiten Wegeventils mit der Atmosphäre verbindbar, wenn von der Druckluftquelle ein Luftdruck in bestimmter Höhe erzeugt wird. Der Vorteil dieser Weiterbildung ist darin zu sehen, dass die Steuerleitung bei einem bestimmten Luftdruck, der von der Druckluftquelle geliefert wird, automatisch.mit der Atmosphäre verbunden wird. Somit ist es ausgeschlossen, dass es zu einer Überlastung der Druckluftquelle kommt, wenn von der Druckluftquelle ein hoher Luftdruck erzeugt wird und die Luftfeder dennoch nicht mit der erzeugten Luft aufgefüllt werden kann, weil der dort vorliegende Luftdruck noch größer als der von der Druckluftquelle erzeugte Luftdruck ist.

Ein Ausführungsbeispiel und weitere Vorteile der Erfindung werden im Zusammenhang mit den nachstehenden Figuren erläutert, darin zeigt:
- Figur 1: eine Niveauregeleinrichtung in schematischer Darstellung,
- Figur 2: eine Niveauregeleinrichtung in schematischer Darstellung,
- Figur 3: eine Niveauregeleinrichtung in schematischer Darstellung.

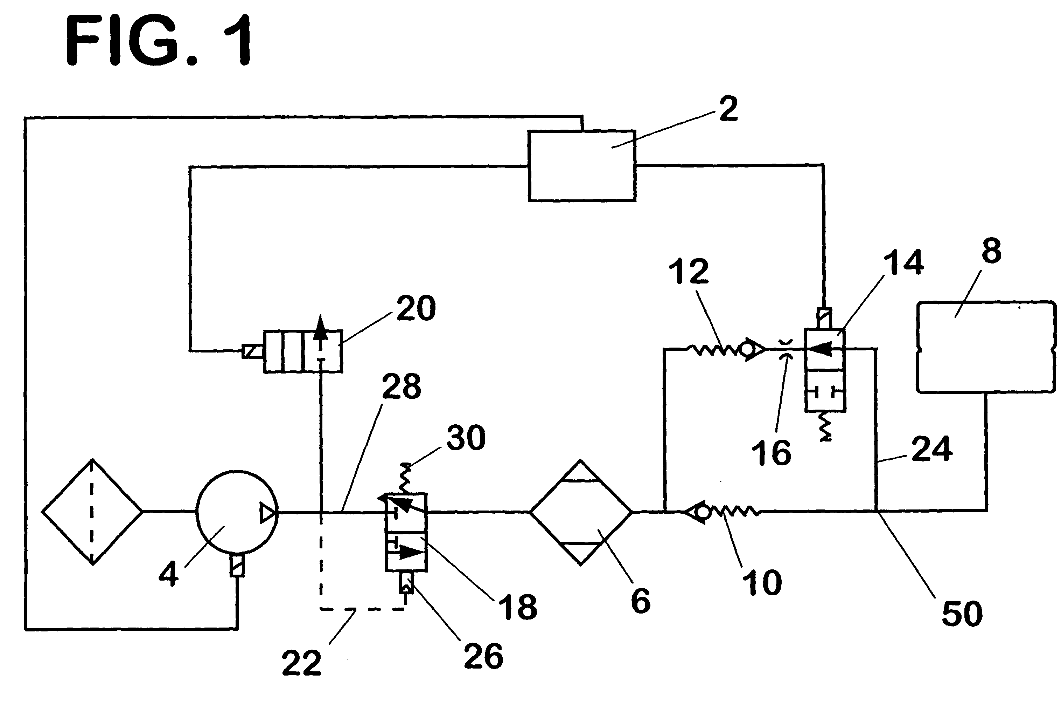

Figur 1 zeigt in schematischer Darstellung eine Niveauregeleinrichtung für ein Fahrzeug mit Luftfedern 8, wobei die Wegeventile 14, 18 und 20 so geschaltet sind, dass die Luftfeder 8 entleert wird. Aus der Luftfeder 8 gelangt die Luft über das erste elektrisch ansteuerbare Wegeventil 14, die Drossel 16 und das zum Lufttrockner 6 hin öffnende Rückschlagventil 12 in den Lufttrockner 6, der beim Entleeren der Luftfeder 8 im Regenerationsbetrieb betrieben wird. Vom Lufttrockner 6 aus gelangt die Luft über das pneumatisch steuerbare zweite Wegeventil 18 in die Atmosphäre. Soll die Luftfeder 8 nicht weiter entleert werden, so wird von der Steuereinheit 2 der Steuereingang des elektrisch steuerbaren ersten Wegeventils 14 stromlos geschaltet, so dass die Rückstellfeder das Wegeventil 14 in die Grundstellung überführt und somit die Leitung 24 sperrt. Soll zu einem späteren Zeitpunkt die Luftfeder 8 aufgefüllt werden, so steuert die Steuereinheit 2 den Kompressor 4 an, so dass dieser zu laufen beginnt. Infolgedessen wird die Steuerleitung 22 und der Steuereingang 26 des pneumatisch steuerbaren zweiten Wegeventils 18 mit Druckluft beaufschlagt, so dass dieses von dem in der Figur 1 gezeigten Schaltzustand in den anderen Schaltzustand übergeht und dann die Leitung 28, die den Kompressor 4 mit dem Lufttrockner 6 verbindet, durchschaltet. Es kann dann von dem Kompressor 4 über den Lufttrockner 6 und das zur Luftfeder 8 hin öffnende Rückschlagventil 10 Luft in die Luftfeder 8 gepumpt werden. Soll der Auffüllvorgang beendet werden, so steuert die Steuereinheit 2 den Kompressor 4 an, so dass dieser aufhört zu laufen. Weiterhin steuert die Steuereinheit 2 den Steuereingang des elektrisch steuerbaren dritten Wegeventils 20 an, so dass dieses von dem in der Figur 1 gezeigten Schaltzustand in den anderen Schaltzustand übergeht. Die Steuerleitung 22 des pneumatisch steuerbaren zweiten Wegeventils 18 ist dann über das dritte Wegeventil 20 mit der Atmosphäre verbunden, so dass der Druck am Steuereingang 26 abfällt und das zweite Wegeventil 18 durch die Rückstellfeder 30 in den in der Figur 1 gezeigten Schaltzustand zurückgeschaltet wird. Durch Überführung des ersten Wegeventils 14 von der Grundstellung in die Figur 1 gezeigte Stellung durch die Steuereinheit 2 kann die Luftfeder 8 wiederum entleert werden.

Da das zweite Wegeventil 18 als pneumatisch steuerbares Wegeventil 18 ausgebildet ist, kann es über einen hohen Strömungsquerschnitt verfügen und weist daher eine geringe Neigung zur Vereisung auf. Darüber hinaus können über die Steuerleitung 22 und den Steuereingang 26 mit Hilfe des Kompressors 4 hohe Schaltkräfte erzeugt werden, so dass das Wegeventil 18 auch dann von dem in der Figur 1 gezeigten Schaltzustand in den anderen Schaltzustand überführt werden kann, wenn es aufgrund der feuchten Luft, die durch dieses Ventil geleitet wird, vereist ist.

Alternativ kann das erste Wegeventil 14 auch zwischen der Luftfeder 8 und dem Punkt 50 angeordnet sein. Eine derartige Anordnung hat den Vorteil, dass in der Grundstellung des ersten Wegeventils 14 keine Luft aus der Luftfeder 8 über eventuelle Undichtigkeiten des Rückschlagventils 10 entweichen kann.

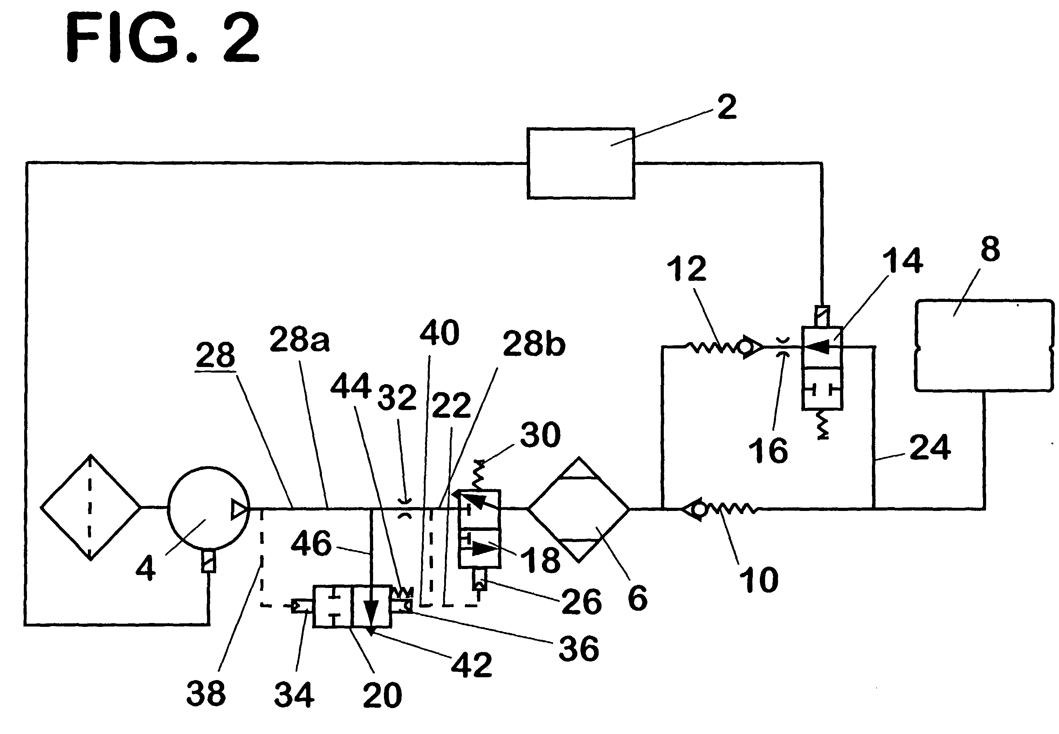

Figur 2 zeigt eine Niveauregeleinrichtung für Fahrzeuge mit Luftfedern 8, die weitgehend genauso aufgebaut ist wie die in der Figur 1 gezeigte Niveauregeleinrichtung. Lediglich der Aufbau zwischen dem Kompressor 4 und dem pneumatisch steuerbaren zweiten Wegeventil 18 ist anders. Bei der in der Figur 2 gezeigten Niveauregeleinrichtung befinden sich die Wegeventile 14, 18 und 20 wiederum in einer Stellung, in der ein Entleeren der Lufteder 8 in die Atmosphäre möglich ist. Der Luftweg ist hierbei der gleiche, wie er bereits im Zusammenhang mit der Figur 1 beschrieben worden ist. Soll die Luftfeder 8 nicht weiter entleert werden, so wird von der Steuereinheit 2 der Steuereingang des Wegeventils 14 stromlos geschaltet, so dass die Rückstellfeder das Wegeventil 14 in die Grundstellung überführt und somit die Leitung 24 sperrt. Zum Auffüllen der Luftfeder wird der Kompressor 4 durch die Steuereinheit 2 angesteuert und fängt daraufhin an zu laufen. Die von dem Kompressor 4 erzeugte Druckluft wird zunächst in die Leitung 28 eingeleitet, wobei sich wegen der Drossel 32 in dem Leitungsteil 28a vor der Drossel 32 ein größerer Luftdruck einstellt als in dem Leitungsteil 28b hinter der Drossel 32. In der Steuerleitung 38 des dritten Wegeventils 20 stellt sich der gleiche Luftdruck ein wie in dem Leitungsteil 28a und in der Steuerleitung 40 des dritten Wegeventils 20 stellt sich der gleiche Luftdruck ein wie in dem Leitungsteil 28b. Infolge des Druckgradienten wird das pneumatisch steuerbare dritte Wegeventil über den an dem Steuereingang 34 anliegende Luftdruck von dem in der Figur 2 gezeigten Schaltzustand in den anderen Schaltzustand überführt, so dass der Ausgang 42 zur Atmosphäre gesperrt ist. Aufgrund des in der Steuerleitung 22 des pneumatisch steuerbaren zweiten Wegeventils 18 anliegenden Luftdrucks wird dieses von dem in der Figur 2 gezeigten Schaltungszustand in den anderen Schaltungszustand überführt, so dass die Leitung 28 von dem Kompressor 4 zu dem Lufttrockner 6 durchgeschaltet ist und der Luftfeder 8 über das Rückschlagventil 10 Druckluft zugeführt werden kann.

Soll der Auffüllvorgang beendet werden, so wird von der Steuereinheit 2 wiederum der Kompressor 4 angesteuert, so dass der Kompressor 4 aufhört zu laufen. Sobald der Kompressor 4 aufgehört hat zu laufen, stellt sich in der Leitung 28 ein Druckgleichgewicht ein, so dass auch in den Steuerleitung 38 und 40 des pneumatisch steuerbaren dritten Wegeventils 20 der gleiche Luftdruck herrscht. In diesem Fall wird das dritte Wegeventil 20 über den Steuereingang 36 und mit Hilfe der Rückstellfeder 44 wieder in den in der Figur 2 gezeigten Schaltzustand überführt. Die Steuerleitung 22 ist dann über die Drossel 32, die Leitung 46 und das dritte Wegeventil 20 mit der Atmosphäre verbunden. Das pneumatisch steuerbare zweite Wegeventil 18 geht also aufgrund der Rückstellkraft, die durch die Feder 30 ausgeübt wird, wieder in den in der Figur 2 gezeigten Schaltzustand über, so dass die Niveauregeleinrichtung für ein erneutes Entleeren bzw. für ein erneutes Auffüllen der Luftfeder 8 bereitsteht.

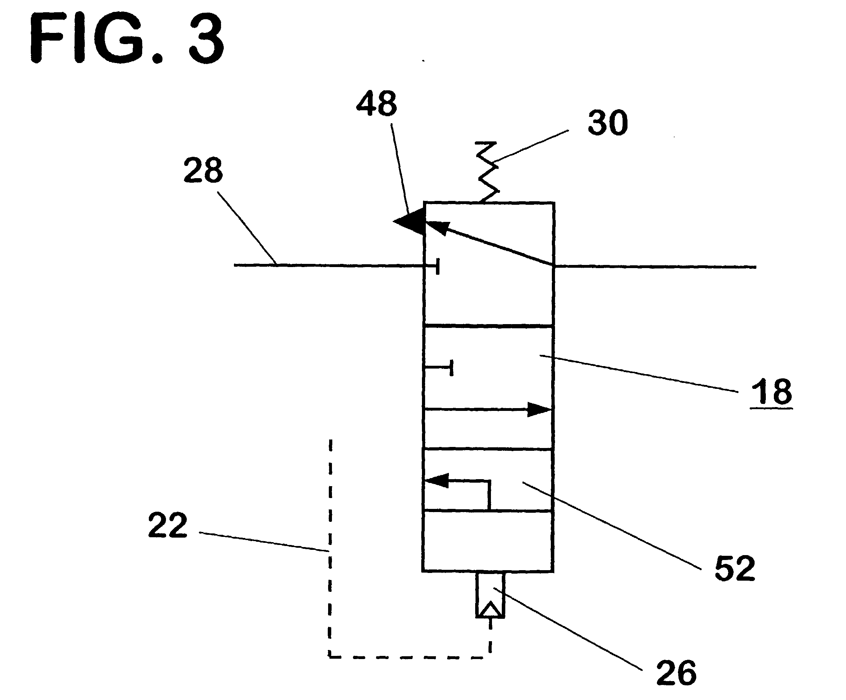

Figur 3 zeigt ein zweites Wegeventil 18, das an sich genauso aufgebaut ist, wie das in den Figuren 1 und 2 gezeigte Wegeventil 18, das jedoch in einen dritten Schaltzustand (angedeutet durch 52) geschaltet werden kann. Mit Hilfe des dritten Schaltzustandes kann die Niveauregeleinrichtung wie folgt vor einer Überbelastung geschützt werden: Liegt in den Luftfedern 8 der Niveauregeleinrichtung bereits ein hoher Luftdruck vor und ergeht von der Steuereinheit 2 dennoch der Befehl, die Luftfedern 8 weiter aufzufüllen (beispielsweise weil ein Pkw stark beladen und der Fahrzeugaufbau infolgedessen stark abgesackt ist), so beginnt der Kompressor 4 zu laufen, um Luft in die Luftfedern 8 zu pumpen. Dies ist aber nur dann möglich, wenn die vom Kompressor 4 erzeugte Druckluft einen höheren Luftdruck aufweist, als die in den Luftfedern 8 vorhandene Druckluft. Kann dies vom Kompressor 4 auch bei maximaler Leistungsabgabe nicht geleistet werden, so besteht die Gefahr, dass der Kompressor 4 überlastet wird. Um dieser Gefahr vorzubeugen, wird das zweite Wegeventil 18 bei einer maximalen Leistungsabgabe des Kompressors 4, bei der an dem Steuereingang 26 der maximal erzeugbare Luftdruck anliegt, in den dritten Schaltzustand geschaltet. In diesem Schaltzustand ist sowohl die Steuerleitung 22 als auch die Luftfeder 8 über den Ausgang 48 mit der Atmosphäre verbunden, so dass einerseits der Kompressor 4 und andererseits die Luftfeder 8 entlastet wird. Eine Überbelastung des Kompressors 4 und der Luftfedern 8 infolge einer zu hohen Fahrzeugbeladung ist somit ausgeschlossen.

## Patentansprüche

1. Niveauregeleinrichtung für Fahrzeuge mit Luftfedern (8), durch die ein Fahrzeugaufbau gegenüber mindestens einer Fahrzeugachse abgefedert ist, wobei
- jede Luftfeder (8) zum Auffüllen über einen Lufttrockner (6) und ein zur Luftfeder (8) öffnendes Rückschlagventil (10) mit einer Druckquelle (4) verbindbar ist
- jede Luftfeder (8) zum Entleeren über ein erstes steuerbares Wegeventil (14) und den Lufttrockner (6) mit der Atmosphäre verbindbar ist,
**dadurch gekennzeichnet, dass**
ein zweites pneumatisch steuerbares Wegeventil (18) zwischen der Druckluftquelle (4) und dem Lufttrockner (6) angeordnet ist, dessen Steuereingang (26)
- in einem ersten Schaltzustand des zweiten Wegeventils (18) mit der von der Druckluftquelle (4) erzeugten Druckluft beaufschlagt ist, wobei dann die Druckluftquelle (4) über das zweite Wegeventil (18) mit dem Lufttrockner (6) verbunden ist
- in einem zweiten Schaltzustand des zweiten Wegeventils (18) mit dem Atmosphärenluftdruck beaufschlagt ist, wobei dann die Atmosphäre über das zweite Wegeventil (18) mit dem Lufttrockner (6) verbunden ist
und ferner dadurch, dass die Steuerleitung (22), die auf den Steuereingang (26) des zweiten Wegeventils (18).führt, über ein steuerbares drittes Wegeventil (20) mit der Atmosphäre verbindbar ist.

2. Niveauregeleinrichtung für Fahrzeuge mit Luftfedern (8) nach Anspruch 1, **dadurch gekennzeichnet, dass** das dritte Wegeventil (20) ein elektrisch steuerbares Ventil (20) ist.

3. Niveauregeleinrichtung für Fahrzeuge mit Luftfedern (8) nach Anspruch 1, **dadurch gekennzeichnet, dass** das dritte Wegeventil (20) ein pneumatisch steuerbares Wegeventil (20) ist.

4. Niveauregeleinrichtung für Fahrzeuge mit Luftfedern (8) nach Anspruch 3, **dadurch gekennzeichnet, dass** das pneumatisch steuerbare dritte Wegeventil (20) zwei pneumatisch steuerbare Steuereingänge (34) und (36) aufweist und
- in einem ersten Schaltzustand des dritten Wegeventils (20) an dem ersten Steuereingang (34) der von der Druckluftquelle (4) erzeugte Luftdruck und an dem zweiten Steuereingang (36) ein Luftdruck anliegt, der kleiner ist als der von der Druckluftquelle (4) erzeugte Luftdruck, wobei das dritte Wegeventil (20) dann die Verbindung der Steuerleitung (22) zur Atmosphäre sperrt
- in einem zweiten Schaltzustand des dritten Wegeventils (20) an dem ersten Steuereingang (34) und an dem zweiten Steuereingang (36) der gleiche Luftdruck anliegt, wobei das dritte Wegeventil (20) dann die Verbindung der Steuerleitung (22) des zweiten Wegeventils (18) zur Atmosphäre öffnet.

5. Niveauregeleinrichtung für Fahrzeuge mit Luftfedern (8) nach einem der Ansprüche 1 bis 4, **dadurch gekennzeichnet, dass** die Steuerleitung (22), die auf den Steuereingang (26) des zweiten Wegeventils führt, in einem dritten Schaltzustand (52) des zweiten Wegeventils (18) mit der Atmosphäre verbindbar ist, wenn von der Druckluftquelle (4) ein Luftdruck in bestimmter Höhe erzeugt wird.

## Claims

1. Level regulating arrangement for vehicles provided with pneumatic springs (8), by means of which arrangement a vehicle structure is spring-mounted relative to at least one vehicle axle, wherein
- each pneumatic spring (8) is connectable to a source of pressure (4) via an air dryer (6) and via a non-return valve (10), which opens towards the pneumatic spring (8), for filling purposes, and
- each pneumatic spring (8) is connectable to the atmosphere via a first controllable directional valve (14) and via the air dryer (6) for emptying purposes,
**characterised in that**
a second pneumatically controllable directional valve (18) is disposed between the source of compresssed air (4) and the air dryer (6), the control inlet (26) of which
- is acted upon by the compressed air, generated by the source of compressed air (4), in a first switching state of the second directional valve (18), the source of compressed air (4) then being connected to the air dryer (6) via the second directional valve (18),
- is acted upon by the atmospheric air pressure in a second switching state of the second directional valve (18), the atmosphere then being connected to the air dryer (6) via the second directional valve (18),
and also **in that** the control line (22), which leads to the control inlet (26) of the second directional valve (18), is connectable to the atmosphere via a controllable third directional valve (20).

2. Level regulating arrangement for vehicles provided with pneumatic springs (8) according to claim 1, **characterised in that** the third directional valve (20) is an electrically controllable valve (20).

3. Level regulating arrangement for vehicles provided with pneumatic springs (8) according to claim 1, **characterised in that** the third directional valve (20) is a pneumatically controllable directional valve (20).

4. Level regulating arrangement for vehicles provided with pneumatic springs (8) according to claim 3, **characterised in that** the pneumatically controllable third directional valve (20) has two pneumatically controllable control inlets (34) and (36), and
- in a first switching state of the third directional valve (20), the air pressure, generated by the source of compressed air (4), is applied to the first control inlet (34), and an air pressure, which is lower than the air pressure generated by the source of compressed air (4), is applied to the second control inlet (36), the third directional valve (20) then blocking the connection between the control line (22) and the atmosphere, and
- in a second switching state of the third directional valve (20), the same air pressure is applied to the first control inlet (34) and to the second control inlet (36), the third directional valve (20) then opening the connection between the control line (22) of the second directional valve (18) and the atmosphere.

5. Level regulating arrangement for vehicles provided with pneumatic springs (8) according to one of claims 1 to 4, **characterised in that** the control line (22), which leads to the control inlet (26) of the second directional valve, is connectable to the atmosphere in a third switching state (52) of the second directional valve (18) when an air pressure of a predetermined magnitude is generated by the source of compressed air (4).

## Revendications

1. Dispositif de réglage du niveau pour des véhicules équipés de ressorts pneumatiques (8) grâce auxquels une carrosserie de véhicule est suspendue par rapport au moins à un axe du véhicule, où
- chaque ressort pneumatique (8), pour le remplissage, peut être raccordé à une source de pression (4) via un séchoir d'air (6) et via un clapet antiretour (10) s'ouvrant sur le ressort pneumatique (8),
- chaque ressort pneumatique (8), pour la purge, peut être raccordé au milieu atmosphérique via un premier distributeur (14) réglable et via le séchoir d'air (6),
**caractérisé**
**en ce qu'**un deuxième distributeur (18) réglable pneumatiquement est disposé entre la source (4) d'air comprimé et le séchoir d'air (6), deuxième distributeur dont l'entrée de commande (26),
- dans un premier état de distribution du deuxième distributeur (18), est chargée de l'air comprimé produit par la source (4) d'air comprimé où, ensuite, la source (4) d'air comprimé est raccordée au séchoir d'air (6) via le deuxième distributeur (18),
- dans un deuxième état de distribution du deuxième distributeur (18), est chargée d'air comprimé atmosphérique où, ensuite, le milieu atmosphérique est raccordé au séchoir d'air (6) via le deuxième distributeur (18),
et **caractérisé en outre**
**en ce que** le circuit de commande (22), qui conduit à l'entrée de commande (26) du deuxième distributeur (18), peut être raccordé au milieu atmosphérique via un troisième distributeur (20) réglable.

2. Dispositif de réglage du niveau pour des véhicules équipés de ressorts pneumatiques (8) selon la revendication 1, **caractérisé en ce que** le troisième distributeur (20) est une vanne (20) réglable électriquement.

3. Dispositif de réglage du niveau pour des véhicules équipés de ressorts pneumatiques (8) selon la revendication 1, **caractérisé en ce que** le troisième distributeur (20) est un distributeur (20) réglable pneumatiquement.

4. Dispositif de réglage du niveau pour des véhicules équipés de ressorts pneumatiques (8) selon la revendication 3, **caractérisé en ce que** le troisième distributeur (20) réglable pneumatiquement comprend deux entrées de commande (34) et (36) réglables pneumatiquement, et
- dans un premier état de distribution du troisième distributeur (20), la pression d'air produite par la source (4) d'air comprimé s'applique sur la première entrée de commande (34) et une pression d'air, qui est inférieure à la pression d'air produite par la source (4) d'air comprimé, s'applique sur la seconde entrée de commande (36), où le troisième distributeur (20) ferme ensuite le raccordement du circuit de commande (22) au milieu atmosphérique,
- dans un deuxième état de distribution du troisième distributeur (20), la même pression d'air s'applique sur la première entrée de commande (34) et sur la seconde entrée de commande (36), où le troisième distributeur (20) ouvre ensuite le raccordement du circuit de commande (22) du deuxième distributeur (18) au milieu atmosphérique.

5. Dispositif de réglage du niveau pour des véhicules équipés de ressorts pneumatiques (8) selon l'une quelconque des revendications 1 à 4, **caractérisé en ce que** le circuit de commande (22) qui conduit à l'entrée de commande (26) du deuxième distributeur peut, dans un troisième état de distribution (52) du deuxième distributeur (18), être raccordé au milieu atmosphérique lorsqu'une pression d'air est produite en certaine quantité par la source (4) d'air comprimé.
